# EUROPEAN PATENT APPLICATION

(11) **EP 4 393 872 A1**
(43) Date of publication of application: **03.07.2024**
(21) Application number: 23818743.9
(22) Date of filing: 10.02.2023
(51) Int. Cl.: C01B 21/00, C01B 32/05, H01M 4/36, H01M 4/58, H01M 4/583, H01M 10/0525

(54) **CARBON MATRIX COMPOSITE VANADIUM NITRIDE NANO ARRAY, AND PREPARATION METHOD THEREFOR AND USE THEREOF**

(30) Priority: 06.06.2022 CN 202210630317
(71) Applicant: Wuhan University Of Technology, Wuhan, Hubei 430070 (CN)
(72) Inventor: MAI, Liqiang, Wuhan, Hubei 430070 (CN); WANG, Hao, Wuhan, Hubei 430070 (CN); TAN, Shuangshuang, Wuhan, Hubei 430070 (CN); JIANG, Yalong, Wuhan, Hubei 430070 (CN); AN, Qinyou, Wuhan, Hubei 430070 (CN)
(74) Representative: Herrmann, Uwe
(86) International application number: PCT/CN2023/075370
(87) International publication number: WO 2023/236575

(57) **Abstract**

The present invention discloses a carbon matrix composite vanadium nitride nanoarray and a preparation method therefor and use thereof. The preparation method includes the following steps: dissolve vanadium pentoxide into an organic solvent to obtain a mixed solution; place a carbon matrix into the mixed solution to undergo a solvothermal reaction and wash and dry a product of the reaction to obtain a precursor; and heat and calcine the precursor in an ammonia atmosphere to obtain the carbon matrix composite vanadium nitride nanoarray. The present invention provides a composite structure of vanadium nitride nanoparticles and a three-dimensional flexible carbon matrix, which can effectively alleviate the volume change generated during an electrode reaction process, significantly improve the cycle life of the battery, provide excellent electrochemical performance, and enhance the charge-discharge efficiency.

## Description

### BACKGROUND OF THE INVENTION

### 1. Technical Field

The present invention relates to the technical field of nanomaterials and electrochemistry, and in particular, to a carbon matrix composite vanadium nitride nanoarray and a preparation method therefor and use thereof.

### 2. Description of Related Art

To meet the ever-increasing demand for energy, it is necessary to develop sustainable energy storage technologies and materials. Lithium-ion batteries have become the leading technology in the market of portable electronics in the twenty-first century. However, lithium-ion batteries may not be the best solution in terms of cost and availability. Sodium-ion batteries work similarly to lithium-ion batteries, and sodium, as one of alkali metals, has the characteristics of abundant reserves, low cost, and the like, so sodium-ion batteries are more cost-effective than lithium-ion batteries in terms of safety performance and large-scale energy storage. Therefore, following the lithium-ion batteries, the sodium-ion batteries have become another research direction with a promising future.

The specific capacity of the entire sodium-ion battery is limited by the capacity of its electrode material. In experimental research, metal sodium is generally used as a battery anode. However, the metal sodium will cause many safety problems such as a low melting point of a sodium anode, and is prone to forming sodium dendrites during cycling, resulting in short circuits and failure of the battery and certain potential safety hazards. Therefore, the metal sodium anode is not suitable for the commercialization of sodium-ion batteries. It is an important goal of sodium-ion battery research to develop an anode material that has high energy density and power density, relatively good cycling performance, and reliable safety performance.

Transition metal nitrides are widely applied to anode materials due to their relatively high electron conductivity. Among the transition metal nitrides, vanadium nitride (VN) has good thermal stability and chemical stability, high theoretical specific capacity, good conductivity (1.6 × 10⁶ S m⁻¹), and, compared with traditional anode materials, higher theoretical specific capacity and wider potential window, and thus is a very potential electrode material. However, electron conduction losses may be caused due to its huge volume expansion (about 240%) occurring during lithium storage and sodium storage, resulting in its short service life and low coulombic efficiency.

Therefore, it is of great significance to design and synthesize a suitable nanostructure as the anode material of high-performance lithium-ion batteries and sodium-ion batteries and improve the electrochemical activity of vanadium nitride.

### BRIEF SUMMARY OF THE INVENTION

In view of the foregoing, the prevent invention provides a carbon matrix composite vanadium nitride nanoarray and a preparation method therefor and use thereof to solve the problems of relatively poor capacitive performance and cycling stability of existing lithium-ion batteries and sodium-ion batteries.

To achieve the above objective, the present invention makes use of the following technical solution:
a method for preparing a carbon matrix composite vanadium nitride nanoarray, including the following steps:
S1: dissolve vanadium pentoxide into an organic solvent to obtain a mixed solution;
S2: place a carbon matrix into the mixed solution to undergo a solvothermal reaction, and wash and dry a product of the reaction to obtain a precursor; and
S3: heat and calcine the precursor in an ammonia atmosphere to obtain the carbon matrix composite vanadium nitride nanoarray.

According to the above technical solution, in the step S1, the vanadium pentoxide and the organic solvent may be used at a ratio of (0.1-2) mmol:(20-60) mL.

According to the above technical solution, the organic solvent may include at least one of ethanol, n-propanol, and n-butanol.

According to the above technical solution, the carbon matrix may include carbon cloth, carbon skeleton, or graphene.

According to the above technical solution, in the step S2, the solvothermal reaction may be conducted at a reaction temperature of 100 °C to 200 °C for a reaction time of 9 h to 48 h.

According to the above technical solution, in the step S3, conditions for the calcination include calcination at 500 °C to 600 °C for 0.5 h to 3 h.

On the basis of the above technical solution, a second objective of the present invention is to provide a carbon matrix composite vanadium nitride nanoarray, which is obtained by the above method for preparing a carbon matrix composite vanadium nitride nanoarray.

According to the above technical solution, a three-dimensional flexible carbon matrix and a vanadium nitride nanosheet growing thereon are included, and the vanadium nitride nanosheet is composed of vanadium nitride nanoparticles.

According to the above technical solution, the vanadium nitride nanosheet may have a diameter of 150 nm to 300 nm.

On the basis of the above technical solution, a third objective of the present invention is to provide use of the above carbon matrix composite vanadium nitride nanoarray as an anode active material of a sodium-ion battery and/or a lithium-ion battery.

Compared with the prior art, the present invention has the following advantages:
(1)The present invention makes use of the three-dimensional flexible carbon matrix, which can accelerate electron transport, and a three-dimensional porous structure composed of the vanadium nitride nanosheet boosts the diffusion of an electrolyte, which can expedite the diffusion of hydroxyl ions in the aqueous electrolyte to the surface of the electrode, facilitating electron transport and rapid electrochemical reactions.
(2)The present invention provides a composite structure of the vanadium nitride nanoparticles and the three-dimensional flexible carbon matrix, which can effectively alleviate the volume change generated during an electrode reaction process, significantly improve the cycle life of the battery, provide excellent electrochemical performance, and enhance the charge-discharge efficiency.
(3)The preparation method provided by the present invention is simple to operate, short in preparation time, and low in cost, and the electrode material prepared thereby has a relatively high specific capacitance value, relatively stable cycling stability, and relatively high flexibility, enabling a great application prospect in the field of anode materials for supercapacitors.

### BRIEF DESCRIPTION OF THE SEVERAL VIEWS OF THE DRAWINGS

To describe the technical solutions of the present invention or in the prior art more clearly, the following briefly describes the accompanying drawings required for describing the embodiments or the prior art. Apparently, the accompanying drawings in the following description show some embodiments of the present invention, and a person of ordinary skill in the art may further derive other accompanying drawings from these accompanying drawings without creative efforts.
FIG. 1 shows an X-ray diffraction (XRD) pattern of the carbon matrix composite vanadium nitride nanoarray according to Example 1 of the present invention;
FIG. 2 shows a low-magnification field emission scanning electron microscope image of the carbon matrix composite vanadium nitride nanoarray according to Example 1 of the present invention;
FIG. 3 shows a high-magnification field emission scanning electron microscope image of the carbon matrix composite vanadium nitride nanoarray according to Example 1 of the present invention;
FIG. 4 shows an energy dispersive spectroscopy (EDS) element distribution map of the carbon matrix composite vanadium nitride nanoarray according to Example 1 of the present invention;
FIG. 5 shows a battery rate performance curve when the carbon matrix composite vanadium nitride nanoarray according to Example 1 of the present invention is used as an anode of a sodium-ion battery;
FIG. 6 shows a battery cycling performance curve at a current density of 1 A/g when the carbon matrix composite vanadium nitride nanoarray according to Example 1 of the present invention is used as an anode of a sodium-ion battery; and
FIG. 7 shows an alternating-current impedance spectrum when the carbon matrix composite vanadium nitride nanoarray according to Example 1 of the present invention is used as an anode of a sodium-ion battery.

### DETAILED DESCRIPTION OF THE INVENTION

To make the foregoing objectives, features, and advantages of the present invention clearer and more comprehensible, the embodiments of the present invention will be further described in detail below with reference to the accompanying drawings.

It should be noted that, in the description of the embodiments of the present application, the description of the term "some embodiments" means that the specific features, structures, materials, or characteristics described in combination with the embodiments or examples are included in at least one embodiment or example of the present invention. In this specification, the schematic representation of the above term does not necessarily refer to the same embodiment or example. Moreover, the specific features, structures, materials, or characteristics described may be combined in any suitable manner in any one or more embodiments or examples.

In the embodiments of the present invention, "in a range of..." includes both end values, for example, "in a range of 1 to 100" includes both end values of 1 and 100.

An embodiment of the present invention provides a method for preparing a carbon matrix composite vanadium nitride nanoarray, including the following steps:
S1: weigh vanadium pentoxide V₂O₅ and dissolve the same into an organic solvent, and sufficiently stir a resulting mixture until the V₂O₅ is completely dissolved to obtain a mixed solution;
S2: add a carbon matrix and the mixed solution into a reactor, and then place the reactor into an oven for heating to undergo a solvothermal reaction; wash a product of the reaction with absolute ethyl alcohol several times to remove impurities; and place the product into the oven for drying to obtain a precursor; and
S3: heat and calcine the precursor in an ammonia atmosphere, and naturally cool the calcined precursor to room temperature to obtain the carbon matrix composite vanadium nitride nanoarray.

Specifically, in the step S1, the vanadium pentoxide and the organic solvent may be used at a ratio of (0.1-2) mmol:(20-60) mL. The organic solvent may include at least one of ethanol, n-propanol, and n-butanol. The carbon matrix may include carbon cloth, carbon skeleton, or graphene. Therefore, they can be selected for application in different scenarios, which broadens the application scenarios.

Specifically, in the step S2, the solvothermal reaction may be conducted at a reaction temperature of 100 °C to 200 °C for a reaction time of 9 h to 48 h. Therefore, the vanadium pentoxide V₂O₅ in the reaction system can grow uniformly and firmly on the surface of the carbon matrix to form vanadium nitride nanosheets with appropriate thickness and regular arrangement. If the reaction temperature is too low, the nanosheets are not easy to form; on the contrary, if the temperature is too high, the reaction is too violent, which is also not conducive to the formation of the nanosheets.

Specifically, in the step S3, conditions for the calcination include calcination at 500 °C to 600 °C for 0.5 h to 3 h. Therefore, vanadium oxide on the vanadium oxide/carbon matrix precursor is oxidized into the vanadium nitride through high-temperature nitriding reduction, wherein ammonia gas with great chemical activity is decomposed into active nitrogen atoms and active hydrogen atoms at 600 °C, and the hydrogen atoms bring away oxygen atoms in the vanadium oxide while the nitrogen atoms supplement atom vacancies to nitride the vanadium oxide into the vanadium nitride.

The present invention provides a porous vanadium nitride nanosheet growing on the surface of the three-dimensional flexible carbon matrix by a hydrothermal synthesis method and high-temperature nitriding reduction, which can effectively alleviate the volume change generated during an electrode reaction process, significantly improve the cycle life of the battery, provide excellent electrochemical performance, and enhance the charge-discharge efficiency on one hand; and on the other hand, this integrated design contains no conductive agent and binder as well as other additives, improving the utilization rate of active substances in the electrode material.

Furthermore, the preparation method provided by the present invention is simple to operate, short in preparation time, and low in cost, and the carbon matrix composite vanadium nitride nanoarray electrode material prepared thereby has a relatively high specific capacitance value, relatively stable cycling stability, and relatively high flexibility, enabling a great application prospect in the field of anode materials for supercapacitors.

On the basis of the above technical solution, another embodiment of the present invention provides a carbon matrix composite vanadium nitride nanoarray prepared by the above preparation method. The carbon matrix composite vanadium nitride nanoarray includes a three-dimensional flexible carbon matrix and a vanadium nitride nanosheet growing thereon, and the vanadium nitride nanosheet is composed of vanadium nitride nanoparticles.

Here, the vanadium nitride nanosheet may have a diameter of 150 nm to 300 nm. Therefore, compared with existing vanadium nitride composite electrode materials, the carbon matrix composite vanadium nitride nanoarray prepared by the embodiment of the present invention has a smaller diameter and a larger contact area with an electrolyte, so that the ion transport path is shorter and the electrical performance is better.

On the basis of the above technical solution, yet another embodiment of the present invention provides use of the above carbon matrix composite vanadium nitride nanoarray as an anode active material of a sodium-ion battery and/or a lithium-ion battery.

The carbon matrix composite vanadium nitride nanoarray provided by the embodiment of the present invention makes use of the three-dimensional flexible carbon matrix as a substrate, which can accelerate electron transport, and a three-dimensional porous structure composed of the vanadium nitride nanosheet boosts the diffusion of an electrolyte, which can expedite the diffusion of hydroxyl ions in the aqueous electrolyte to the surface of the electrode, facilitating electron transport and rapid electrochemical reactions.

On the basis of the above embodiments, the following examples are provided to further describe the present invention. It should be understood that these examples are only intended to illustrate the present invention rather than to limit the scope of the present invention. The experimental methods in the following examples are generally carried out according to the conditions recommended by the manufacturer if no conditions are indicated herein. The percentages and parts are calculated by mass, unless otherwise stated.

### Example 1

This example provides a method for preparing a carbon matrix composite vanadium nitride nanoarray, including the following steps:
1)0.3 mmol of V₂O₅ was weighed and dissolved into 40 mL of n-propanol, and a resulting mixture was sufficiently stirred until the V₂O₅ was completely dissolved to obtain a mixed solution;
2)the mixed solution and a carbon matrix were added into a reactor, and then the reactor was placed into an oven for heating at 100 °C for 24 h to undergo a solvothermal reaction; a product of the reaction was washed with absolute ethyl alcohol 3 times and then was placed into the oven for drying to obtain a precursor; and
3)the precursor was heated and calcined at 550 °C for 1 h in an ammonia atmosphere and then naturally cooled to room temperature to obtain the carbon matrix composite vanadium nitride nanoarray.

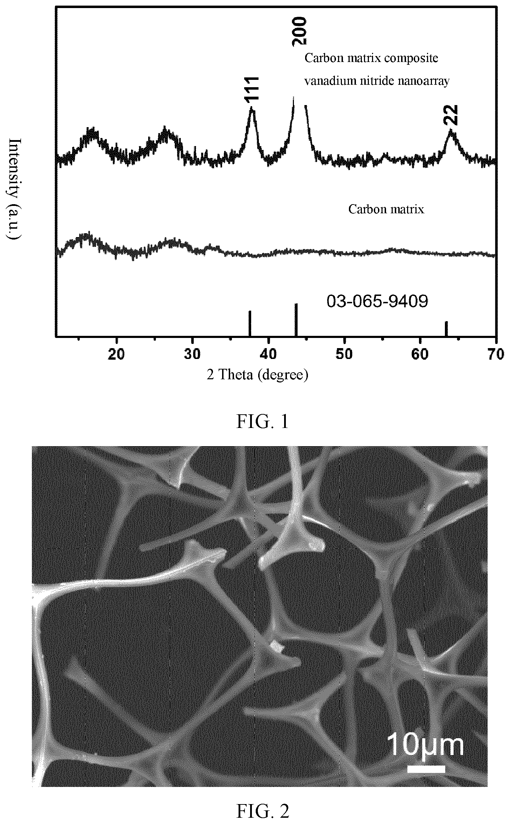

The carbon matrix composite vanadium nitride nanoarray prepared according to Example 1 was taken for example to conduct morphological and structural characterization. The graphical results are shown in FIGs. 1-4.

FIG. 1 shows an XRD pattern of the carbon matrix composite vanadium nitride nanoarray. It can be seen from FIG. 1 that a characteristic peak of nanoparticles can match with a crystal phase of vanadium nitride (JCPDS: 03-065-9409) well, illustrating that this sample includes vanadium nitride nanoparticles.

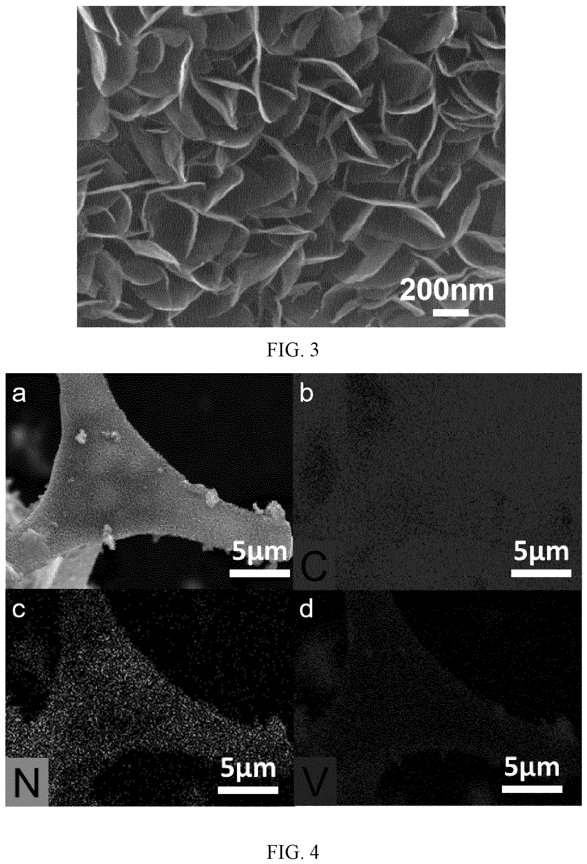

FIG. 2 and FIG. 3 respectively show a low-magnification field emission scanning electron microscope image and a high-magnification field emission scanning electron microscope image of the carbon matrix composite vanadium nitride nanoarray. It can be seen from FIG. 2 that the pore distribution of the three-dimensional flexible carbon matrix is in a range of 30 µm to 200 µm. It can be seen from FIG. 3 that the vanadium nitride nanosheets have a diameter in a range of 150 nm to 300 nm and are uniformly distributed on the three-dimensional flexible carbon matrix to form a good array structure.

FIG. 4 shows an EDS element distribution map of the carbon matrix composite vanadium nitride nanoarray. It can be seen from FIG. 4 that elements C, N, and V are present and uniformly distributed on the carbon matrix, indicating that the vanadium nitride nanosheets uniformly grow on the surface of the carbon matrix.

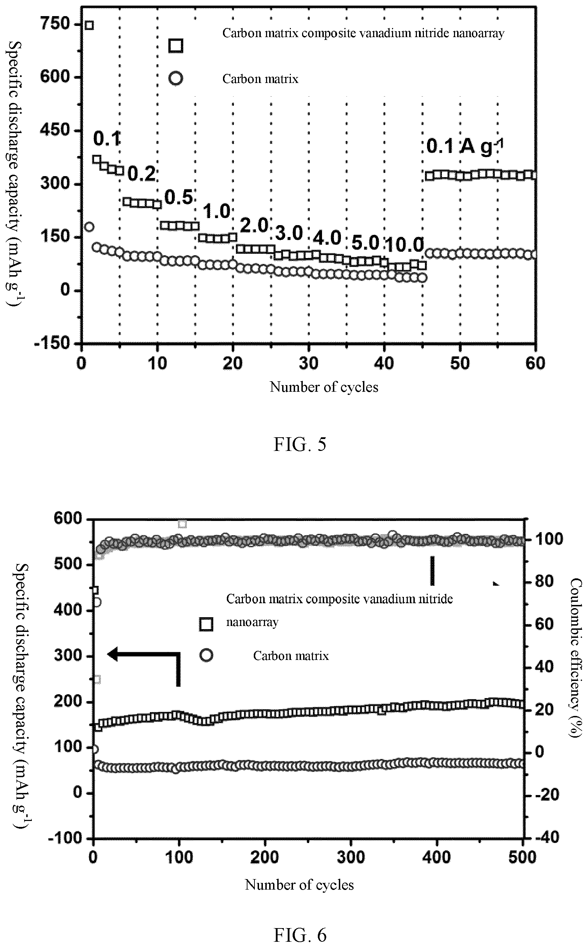

The carbon matrix composite vanadium nitride nanoarray prepared according to Example 1 is used as an anode active material of a lithium-ion battery and a sodium-ion battery. The assembly method of the lithium-ion battery and the sodium-ion battery is the same as the common method, and will not be elaborated herein. The carbon matrix composite vanadium nitride nanoarray was taken for example to act as an anode active material of a sodium-ion battery to assemble the sodium-ion battery. The graphical results of electrochemical testing are shown in FIGs. 5-7.

FIG. 5 shows a rate performance curve of the sodium-ion battery. It can be seen from FIG. 5 that the reversible capacity of the sodium-ion battery is 335.7 mAh/g at a current density of 0.1 A/g and still 153.7 mAh/g at a current density of 1 A/g, which indicates that the carbon matrix composite vanadium nitride nanoarray prepared according to Example 1 exhibits excellent cycling stability when acting as the anode active material of the sodium-ion battery.

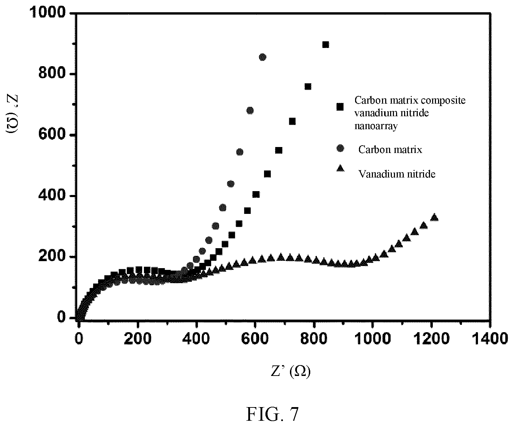

FIG. 6 and FIG. 7 respectively show a cycling performance curve and an alternating-current impedance spectrum of the sodium-ion battery obtained at a current density of 1 A/g. It can be seen from FIG. 6 that the capacity can reach up to 196.6 mAh/g after 500 cycles at a current density of 1 A/g. It can be seen from FIG. 7 that the charge transfer resistance is 436 Ω. The above results indicate that the carbon matrix composite vanadium nitride nanoarray has excellent high-cycle and high-rate characteristics, and is a potential anode material of long-life lithium-ion batteries and sodium-ion batteries.

### Example 2

This example provides a method for preparing a carbon matrix composite vanadium nitride nanoarray, including the following steps:
1) 0.3 mmol of V₂O₅ was weighed and dissolved into 40 mL of n-propanol, and a resulting mixture was sufficiently stirred until the V₂O₅ was completely dissolved to obtain a mixed solution;
2) the mixed solution and a carbon matrix were added into a reactor, and then the reactor was placed into an oven for heating at 100 °C for 48 h to undergo a solvothermal reaction; a product of the reaction was washed with absolute ethyl alcohol 3 times and then was placed into the oven for drying to obtain a precursor; and
3) the precursor was heated and calcined at 550 °C for 1 h in an ammonia atmosphere and then naturally cooled to room temperature to obtain the carbon matrix composite vanadium nitride nanoarray.

The carbon matrix composite vanadium nitride nanoarray prepared according to Example 2 was taken for example to act as an anode active material of a sodium-ion battery to assemble the sodium-ion battery. The sodium-ion battery was subject to electrochemical testing. It was measured that the reversible capacity of the sodium-ion battery was 332 mAh/g at a current density of 0.1 A/g and 149 mAh/g at a current density of 1 A/g, indicating excellent cycling stability; the capacity could achieve 190 mAh/g after 500 cycles at a current density of 1 A/g; and its charge transfer resistance obtained by alternating-current impedance testing was 457 S2, indicating excellent high-cycle and high-rate characteristics.

### Example 3

This example provides a method for preparing a carbon matrix composite vanadium nitride nanoarray, including the following steps:
1)0.3 mmol of V₂O₅ was weighed and dissolved into 40 mL of n-butanol, and a resulting mixture was sufficiently stirred until the V₂O₅ was completely dissolved to obtain a mixed solution;
2)the mixed solution and a carbon matrix were added into a reactor, and then the reactor was placed into an oven for heating at 100 °C for 24 h to undergo a solvothermal reaction; a product of the reaction was washed with absolute ethyl alcohol 3 times and then was placed into the oven for drying to obtain a precursor; and
3) the precursor was heated and calcined at 550 °C for 1 h in an ammonia atmosphere and then naturally cooled to room temperature to obtain the carbon matrix composite vanadium nitride nanoarray.

The carbon matrix composite vanadium nitride nanoarray prepared according to Example 3 was taken for example to act as an anode active material of a sodium-ion battery to assemble the sodium-ion battery. The sodium-ion battery was subject to electrochemical testing. It was measured that the reversible capacity of the sodium-ion battery was 326 mAh/g at a current density of 0.1 A/g and 142 mAh/g at a current density of 1 A/g, indicating excellent cycling stability; the capacity could achieve 182 mAh/g after 500 cycles at a current density of 1 A/g; and its charge transfer resistance obtained by alternating-current impedance testing was 483 S2, indicating excellent high-cycle and high-rate characteristics.

### Example 4

This example provides a method for preparing a carbon matrix composite vanadium nitride nanoarray, including the following steps:
1) 0.25 mmol of V₂O₅ was weighed and dissolved into 40 mL of n-propanol, and a resulting mixture was sufficiently stirred until the V₂O₅ was completely dissolved to obtain a mixed solution;
2) the mixed solution and a carbon matrix were added into a reactor, and then the reactor was placed into an oven for heating at 100 °C for 24 h to undergo a solvothermal reaction; a product of the reaction was washed with absolute ethyl alcohol 3 times and then was placed into the oven for drying to obtain a precursor; and
3) the precursor was heated and calcined at 550 °C for 1 h in an ammonia atmosphere and then naturally cooled to room temperature to obtain the carbon matrix composite vanadium nitride nanoarray.

The carbon matrix composite vanadium nitride nanoarray prepared according to Example 4 was taken for example to act as an anode active material of a sodium-ion battery to assemble the sodium-ion battery. The sodium-ion battery was subject to electrochemical testing. It was measured that the reversible capacity of the sodium-ion battery was 334 mAh/g at a current density of 0.1 A/g and 151 mAh/g at a current density of 1 A/g, indicating excellent cycling stability; the capacity could achieve 193 mAh/g after 500 cycles at a current density of 1 A/g; and its charge transfer resistance obtained by alternating-current impedance testing was 442 S2, indicating excellent high-cycle and high-rate characteristics.

### Example 5

This example provides a method for preparing a carbon matrix composite vanadium nitride nanoarray, including the following steps:
1) 0.35 mmol of V₂O₅ was weighed and dissolved into 40 mL of n-propanol, and a resulting mixture was sufficiently stirred until the V₂O₅ was completely dissolved to obtain a mixed solution;
2) the mixed solution and a carbon matrix were added into a reactor, and then the reactor was placed into an oven for heating at 100 °C for 24 h to undergo a solvothermal reaction; a product of the reaction was washed with absolute ethyl alcohol 3 times and then was placed into the oven for drying to obtain a precursor; and
3) the precursor was heated and calcined at 550 °C for 1 h in an ammonia atmosphere and then naturally cooled to room temperature to obtain the carbon matrix composite vanadium nitride nanoarray.

The carbon matrix composite vanadium nitride nanoarray prepared according to Example 5 was taken for example to act as an anode active material of a sodium-ion battery to assemble the sodium-ion battery. The sodium-ion battery was subject to electrochemical testing. It was measured that the reversible capacity of the sodium-ion battery was 329 mAh/g at a current density of 0.1 A/g and 152 mAh/g at a current density of 1 A/g, indicating excellent cycling stability; the capacity could achieve 187 mAh/g after 500 cycles at a current density of 1 A/g; and its charge transfer resistance obtained by alternating-current impedance testing was 449 S2, indicating excellent high-cycle and high-rate characteristics.

### Example 6

This example provides a method for preparing a carbon matrix composite vanadium nitride nanoarray, including the following steps:
1) 0.3 mmol of V₂O₅ was weighed and dissolved into 60 mL of n-propanol, and a resulting mixture was sufficiently stirred until the V₂O₅ was completely dissolved to obtain a mixed solution;
2) the mixed solution and a carbon matrix were added into a reactor, and then the reactor was placed into an oven for heating at 100 °C for 24 h to undergo a solvothermal reaction; a product of the reaction was washed with absolute ethyl alcohol 3 times and then was placed into the oven for drying to obtain a precursor; and
3) the precursor was heated and calcined at 550 °C for 1 h in an ammonia atmosphere and then naturally cooled to room temperature to obtain the carbon matrix composite vanadium nitride nanoarray.

The carbon matrix composite vanadium nitride nanoarray prepared according to Example 5 was taken for example to act as an anode active material of a sodium-ion battery to assemble the sodium-ion battery. The sodium-ion battery was subject to electrochemical testing. It was measured that: the reversible capacity of the sodium-ion battery was 325 mAh/g at a current density of 0.1 A/g and 143 mAh/g at a current density of 1 A/g, indicating excellent cycling stability; the capacity could achieve 186 mAh/g after 500 cycles at a current density of 1 A/g; and its charge transfer resistance obtained by alternating-current impedance testing was 453 S2, indicating excellent high-cycle and high-rate characteristics.

Although the present invention is disclosed as above, the protection scope disclosed in the present invention is not limited thereto. Those skilled in the art can make various changes and modifications without departing from the spirit and scope of the present invention, and all these changes and modifications shall fall within the protection scope of the present invention.

## Claims

1. A method for preparing a carbon matrix composite vanadium nitride nanoarray, **characterized in that** the method comprises the following steps:
S1: dissolve vanadium pentoxide into an organic solvent to obtain a mixed solution;
S2: place a carbon matrix into the mixed solution to undergo a solvothermal reaction, and wash and dry a product of the reaction to obtain a precursor; and
S3: heat and calcine the precursor in an ammonia atmosphere to obtain the carbon matrix composite vanadium nitride nanoarray.

2. The preparation method according to claim 1, **characterized in that** in the step S1, the vanadium pentoxide and the organic solvent are used at a ratio of (0.1-2) mmol:(20-60) mL.

3. The preparation method according to claim 2, **characterized in that** the organic solvent comprises at least one of ethanol, n-propanol, and n-butanol.

4. The preparation method according to claim 2 or 3, **characterized in that** the carbon matrix comprises carbon cloth, carbon skeleton, or graphene.

5. The preparation method according to claim 1, **characterized in that** in the step S2, the solvothermal reaction is conducted at a reaction temperature of 100 °C to 200 °C for a reaction time of 9 h to 48 h.

6. The preparation method according to claim 5, **characterized in that** in the step S3, conditions for the calcination comprise calcination at 500 °C to 600 °C for 0.5 h to 3 h.

7. A carbon matrix composite vanadium nitride nanoarray, **characterized in that** the carbon matrix composite vanadium nitride nanoarray is prepared by the method for preparing a carbon matrix composite vanadium nitride nanoarray according to any one of claims 1 to 6.

8. The carbon matrix composite vanadium nitride nanoarray according to claim 7, **characterized in that** the carbon matrix composite vanadium nitride nanoarray comprises a three-dimensional flexible carbon matrix and a vanadium nitride nanosheet growing on the carbon matrix, and the vanadium nitride nanosheet is composed of vanadium nitride nanoparticles.

9. The carbon matrix composite vanadium nitride nanoarray according to claim 8, **characterized in that** the vanadium nitride nanosheet has a diameter of 150 nm to 300 nm.

10. Use of the carbon matrix composite vanadium nitride nanoarray prepared by the preparation method according to any one of claims 1 to 6 or the carbon matrix composite vanadium nitride nanoarray according to any one of claims 7 to 9 as an anode active material of a sodium-ion battery and/or a lithium-ion battery.
